# EUROPEAN PATENT SPECIFICATION

(11) **EP 4 134 679 B1**
(45) Date of publication and mention of the grant of the patent: **17.06.2026**
(21) Application number: 21191030.2
(22) Date of filing: 12.08.2021
(51) Int. Cl.: G01N 35/10

(54) **SAMPLE INPUT INTERFACE**
PROBENEINGABESCHNITTSTELLE
INTERFACE D'ENTRÉE D'ÉCHANTILLON

(43) Date of publication of application: 15.02.2023
(73) Proprietor: F. Hoffmann-La Roche AG, 4070 Basel (CH); Roche Diagnostics GmbH, 68305 Mannheim (DE)
(72) Inventor: KOSTADINOVIC, Milenko, 6343 Rotkreuz (CH); BASCHNAGEL, Marco, 6343 Rotkreuz (CH); GEIGER, Fabian, 6343 Rotkreuz (CH); KUEFFER, Robert, 6343 Rotkreuz (CH)
(74) Representative: Gundel, Isabelle

(56) References cited:
- US-A- 5 983 734

## Description

### FIELD OF THE INVENTION

The present invention refers to a sample input interface, to an in-vitro diagnostic analyzer comprising the sample input interface and to a method for inputting samples into a detecting unit of the in-vitro diagnostic analyzer.

### BACKGROUND

In medicine, doctor's diagnosis and patient treatment often relies on the measurement of patient sample parameters carried out by in-vitro diagnostic analyzers. Often and especially in emergency situations, it is important that the measurement results are delivered as soon as possible. Also it is generally important that the analyzers perform correctly by providing precise and reliable measurements.

Thus, it is a general requirement for in-vitro diagnostic analyzers to implement a set of quality control (QC) procedures to make sure that the analyzers are working correctly.

One of these procedures is calibration. In most cases calibration is performed using standard solutions, with known concentrations. In this way it is possible to correlate a measured signal to a quantitative result. Calibration should be performed more or less frequently depending on the system and other variable factors which may affect performance.

In addition, between consecutive calibrations, one or more reference samples, also called QC samples, with known values of the parameters of interest are typically also measured, in the same way as patient samples are measured, in order to confirm that a calibrated analyzer is actually within the specifications or admissible range.

It is typically the case that during QC procedures an analyzer or component thereof is not available for use, e.g. not available to accept new samples. Thus an operator may be in the situation to have to wait for the analyzer to become again available, e.g. until a QC procedure is completed, before being able to input a new sample into the analyzer. As a consequence, operator's time may be wasted, that could be otherwise used more efficiently. If the operator cannot afford waiting because of other more urgent ongoing activities, he or she will typically make a second attempt at a later time, whereas the analyzer had likely become available in the meantime much earlier, thus unnecessarily delaying sample analysis.

US5983734A discloses a modular automated diagnostic analyzer having a fluid entry module for sample aspiration, a valve module for selecting fluids and a pump module for fluidic movement. The fluid entry module encloses an aspiration tube rotatably and slidably engaged with the analysis mechanism chassis to move to different positions for the introduction of calibration and cleaning fluids and the aspiration of fluids into the analysis apparatus from different types of sample containers. A wiping seal removes residues of aspirated fluids from the exterior surfaces of the aspiration tube with the residue being aspirated into the analysis apparatus for disposal.

### GENERAL DESCRIPTION

It is against the above background that aspects of the present disclosure provide certain unobvious advantages and advancements over the prior art. In particular, a new sample input interface and a new automated method for inputting samples into a detecting unit of an in-vitro diagnostic analyzer are disclosed that ensure analytical performance of an analyzer without unnecessarily compromising sample processing throughput, and in particular without wasting operator's time. Another advantage is that sample carryover is minimized. Another advantage is that the sample input procedure is further facilitated. Another advantage is the compatibility with different types of sample containers.

A "sample input interface" as used herein is an automated functional unit, module or component of an in-vitro diagnostic analyzer arranged at a position conveniently accessible by an operator configured to transfer a sample from an external sample container brought up by the operator into the in-vitro diagnostic analyzer for in-vitro diagnostic analysis. In particular, the procedure by the operator with respect to sample input, may be limited to only bringing, e.g. coupling, attaching, connecting, sitting, introducing, plugging-in a sample container to the sample input interface.

In particular, the sample input interface of the present disclosure comprises a sample input port comprising an outer input-port side configured for plugging-in an open end of a sample container and an inner input-port side, and an aspiration needle comprising an upstream end and a downstream end. The downstream end is fluidically connected or connectable to the detecting unit and the upstream end is configured to alternately couple to the inner input-port side in order to aspirate a sample from a sample container plugged in the outer input-port side and to a fluid supply port in order to aspirate other fluid(s) from a fluid supply unit of the in-vitro diagnostic analyzer. The outer input-port side is further configured to alternately couple (after unplugging the sample container) to the fluid supply port while the upstream end of the aspiration needle is coupled to the inner input-port side in order to rinse the sample input port with fluid aspirated by the aspiration needle from the fluid supply unit via the sample input port.

A "sample container" as used herein is either a primary container or sample collection device, which is used to receive a sample, e.g. directly from a patient, or a "secondary container", which may be used to receive an aliquot of sample from a primary container or sample collection device. The sample container typically comprises at least one open end. According to one aspect, the sample container is a capillary-like sample container having two open ends and a hollow channel in between, typically used to draw an amount of sample equal to or less than its inner volume, typically using capillary force. Capillary tubes, especially those for blood gas analyses, as available in the market, may be made of plastic or glass, and can differ in their filling volume, typically in the range of approx. 50 µL to 250 µL, and e.g. type of anticoagulant used. The filling volume is typically sufficient for only one analysis per sample container. According to one aspect, the sample container is a syringe-like sample container, having a cylindrical main body, an open end and a plunger inserted into a second end, translatable through the main body, typically used to aspirate and/or dispense a sample via the open end by actuation of the plunger at the other end. Syringes, and in particular specifically adapted blood gas analysis syringes, available in the market may be made of plastic or glass, and can also differ in their filling volume (approx. 1 mL to 20 mL) and the anticoagulant used. Typically, the open end is embodied as an appendix to the main body having a narrower and conical (luer) shape compared to the main body, configured e.g. to be coupled to an aspiration/dispensing needle, tip, tubing or the like. The conical part with its open end is standardized by the Luer standard **(DIN-EN20594-1;** EN1707; EN20594-1). **In** addition, the minimum inner diameter of a Luer taper is defined by the standard for sterile hypodermic syringes for single use (EN ISO 7886-1). Due to the large filling volume, one syringe often provides enough sample for several measurements.

The term "sample" refers to a biological material potentially containing one or more analytes of interest and whose detection or analysis, qualitative and/or quantitative, may be associated to a clinical condition. The sample can be derived from any biological source, such as a physiological fluid, including blood, saliva, ocular lens fluid, cerebral spinal fluid, sweat, urine, milk, ascites fluid, mucous, synovial fluid, peritoneal fluid, amniotic fluid, tissue, cells or the like. The test sample can be pretreated prior to use, such as preparing plasma or serum from blood, diluting viscous fluids, lysis or the like; methods of treatment can involve filtration, centrifugation, distillation, concentration, inactivation of interfering components, and the addition of reagents. A sample may be used directly as obtained from the source in some cases or following a pretreatment and/or sample preparation workflow to modify the character of the sample, e.g. after adding an internal standard, after being diluted with another solution or after having being mixed with reagents e.g. to enable carrying out one or more in vitro diagnostic tests, or for enriching (extracting/separating/concentrating) analytes of interest and/or for removing matrix components potentially interfering with the detection of the analyte(s) of interest.

According to one aspect, the sample is blood or a blood derivative such as plasma or serum. According to certain aspects, analytes of interest are gases, such as O2 and CO2, blood electrolytes such as Sodium (Na+), Potassium (K+), Chloride (Cl-), Calcium (Ca++), protons (H+) in relation to pH, metabolites such as Glucose and Lactate, drugs of abuse, therapeutic drugs, hormones, markers, proteins and the like. Other analytes of interest are hemoglobin, hemoglobin derivatives such as Deoxygenated hemoglobin, Oxyhemoglobin, Carboxyhemoglobin, Methemoglobin, bilirubin, Urea, Creatinine. The list is however not exhaustive.

A "sample input port" as used herein is a component of the sample input interface particularly adapted to receive the open end of a sample container and to hold the sample container in place until at least part of the sample contained therein is aspirated, without the operator having to hold or to interact with the sample container until sample analysis is completed and the sample container can be removed. In particular, the sample input port comprises an outer input-port side, accessible to the operator, configured for plugging-in an open end of a sample container (the terminal part of sample container with an open end) and temporarily holding the sample container, and an inner input-port side communicating with the outer input-port side and configured to couple to an inner aspiration needle for the sample to be aspirated from the sample container plugged in the outer input-port side. In particular, the sample input port may be constructed of an elastomeric material, and the outer input-port side may comprise a cavity with cavity wall sections of different respective cross-sections configured for plugging-in the open end of different respective sample containers, the sample containers including at least a capillary-like sample container and a syringe-like sample container. More specifically, the outer input-port side may comprise wall sections defining an inner cavity, each section having a substantially cylindrical or frustoconical shape and varying inner diameter, such as to define a sealing and/or holding contact surface for a different type of sample container respectively, e.g. a capillary sealing contact surface in a first section for a capillary-like sample container and a syringe sealing contact surface in a second section for a syringe-like sample container. The inner input-port side may be integral to the outer input-port side, i.e. made as one piece, or constructed as a separate piece and coupled to the outer input-port side. In particular the inner input-port side also comprises an inner cavity formed by one or more inner wall sections with parts of varying inner diameter defining at least one sealing contact surface for the aspiration needle, particularly for the upstream end of the aspiration needle. The outer input-port side and the inner input-port side are also respectively so dimensioned and designed that the open end of the sample container is prevented from entering the inner input-port side from the outer input-port side whereas the aspiration needle is allowed to enter the outer input-port side from the inner input-port side.

An "aspiration needle" as used herein refers to the terminal part of a fluidic system through which samples and other fluids can enter the fluidic system. The aspiration needle comprises an upstream end and a downstream end. The downstream end is fluidically connected or connectable to the detecting unit via the fluidic system and the upstream end is configured to alternately couple to the inner input-port side in order to aspirate a sample from a sample container plugged in the outer input-port side and to a fluid supply port in order to aspirate other fluid(s) from a fluid supply unit of the in-vitro diagnostic analyzer. The aspiration needle can be any sort of hollow fluidic conduit allowing fluid transport and can be made of any material, at least partially, e.g. at least the upstream end, with dimensions and with rigidity suitable for coupling to the inner input-port side and to the fluid supply port. According to one aspect the aspiration needle is a steal needle. The aspiration needle may be conveniently operatively coupled to, e.g. at least partially integrated into, a needle guiding arm that enables controlled movement, e.g. rotational and/or translational (forward/backward) movement, and precise alignment of the upstream end alternately with the inner input-port side and the fluid supply port. According to one aspect, the upstream end is translatable through a coupling head of the needle guiding arm, constructed at least in part of an elastomeric material with a shape at least in part complementary to and/or forming a seal with the inner input-port side and at least in part complementary to and/or forming a sealing with the fluid supply port.

A "fluidic system" is a system comprising one or more fluidic lines connected or connectable at least in part to each other. It may further comprise at least one pump for aspirating fluids through the fluidic line(s), one or more valves, chambers, filters, membranes, etc.. for regulating or controlling fluid flow. "Regulating" fluid flow may comprise changing direction of flow, diverting flow from a fluidic line to another fluidic line, enabling or disabling fluidic flow in a fluidic line. The flow system comprises at least one fluid supply line for supplying fluids, including samples, to the detecting unit. A "fluidic line" is a hollow conduit such as a tubing, a channel, a chamber or combinations thereof, comprising one or more parts, suitable for the passage of fluids in a liquid tight manner, and which can have any shape and size, but which is typically optimized to minimize internal volumes and dead volumes. The parts may be flexible, rigid or elastic or combinations thereof.

A "fluid supply unit" as used herein is a module or component of the in-vitro diagnostic analyzer comprising one or more fluid reservoirs, and possibly also one or more waste containers where fluids circulated through the fluidic system may be wasted at the end of the process. The term "other fluid(s)" as used herein refers to fluid(s) contained in the fluid reservoirs, other than patient samples to be subjected to sample analysis and which are introduced via the sample input port. Such other fluid(s) may comprise for example any one or more of a reference fluid, one or more calibration fluids, a wash/rinse fluid, a wetting fluid, one or more QC samples.

A "fluid supply port" is a port that from one side is fluidically connected or connectable to the fluid supply unit, e.g. via at least one fluid supply conduit, and to which from another side both the outer input-port side and the upstream end of the aspiration needle can alternately be coupled, e.g. plugged-in, in order for any other fluid to be aspirated from the fluid supply unit by the aspiration needle either directly or via the sample input port. In particular, the outer input-port side is configured to be coupled to the fluid supply port while the upstream end of the aspiration needle is coupled to the inner input-port side in order to rinse the sample input port with fluid, e.g. wash/rinse fluid, aspirated by the aspiration needle from the fluid supply unit via the sample input port. In particular the fluid supply port may be constructed at least in part of an elastomeric material with a shape at least in part complementary to and/or forming a seal with the outer input-port side and at least in part complementary to and/or forming a sealing with the aspiration needle.

According to one aspect, the sample input port is rotatable at least between a sample input position and a fluid supply position, the sample input position being at an angular position that is conveniently accessible by an operator for plugging in a sample container and/or that facilitates sample aspiration from the sample container, the fluid supply position being in correspondence to the fluid supply port and not necessarily accessible to the operator from the outside.

According to one aspect, the aspiration needle is rotatable at least between the sample input position in which the upstream end of the aspiration needle is aligned with, e.g. coupled to, the inner input-port side when the sample input port is in the sample input position and a fluid supply position in which the upstream end of the aspiration needle is aligned with, e.g. coupled to, the fluid supply port. The aspiration needle and the needle guiding arm are rotatable together.

According to one aspect, at least the upstream end of the aspiration needle is linearly movable along a longitudinal direction of the aspiration needle in order to couple to and decouple from the inner input-port side and the fluid supply port respectively. According to one aspect, the needle guiding arm is linearly movable along a longitudinal direction of the aspiration needle in order for its coupling head to couple to and decouple from the inner input-port side and the fluid supply port respectively. The needle guiding arm can be movable together with and/or independently from the aspiration needle in the longitudinal direction.

According to one aspect, the sample input port is movable along the longitudinal direction of the aspiration needle together with, or independently from and relative to, the aspiration needle.

According to one aspect, the sample input port and the aspiration needle, directly or via the needle guiding arm, are connected to a respective drive pin and are movable by driving the respective pin through a respective guiding slot by a respective rotatable arm, each rotatable arm comprising a driving slot through which the respective pin can slide upon rotation of the arm thereby driving the respective pin through the respective guiding slot.

According to one aspect, each guiding slot comprises ends, linear segments and curved segments respectively at positions which cause the sample input port and the aspiration needle (though and/or together with the needle guiding arm), respectively to stop, to linearly move and/or to rotate by driving the pin through the guiding slot.

According to one aspect, the sample input interface comprises an independent motor for each rotatable arm in order to independently and/or simultaneously move the sample input port and the aspiration needle respectively.

According to one aspect, the outer input-port side comprises a vent for air to enter a syringe-like sample container plugged in the outer input-port side upon sample aspiration.

According to one aspect, the sample input port is rotatable to an intermediate position between the sample input position and the fluid supply position together with the aspiration needle and the sample input port is movable along the longitudinal direction of the aspiration needle relative to the aspiration needle in the intermediate position, in order for the upstream end of the aspiration needle to enter at least partially into the syringe-like sample container through the open end of the syringe-like sample container and for air entered through the vent to remain near the open end of the syringe-like sample container and away from the upstream end of the aspiration needle upon sample aspiration.

An in-vitro diagnostic analyzer comprising a sample input interface according to any of the aspects is herein also disclosed.

An "in-vitro diagnostic analyzer" is a laboratory automated device for the analysis of samples for in vitro diagnostics. The in-vitro diagnostic analyzer may have different configurations according to the type of analysis and/or type of samples and/or according to the particular laboratory workflow. The in-vitro diagnostic analyzer can comprise one or more analytical units or modules, comprising at least one detecting unit, designed to execute respective workflows that are optimized for one or more certain types of analysis, and to detect certain types of parameters, e.g. gases, electrolytes, metabolites, clinical chemistry analytes, immunochemistry analytes, coagulation parameters, hematology parameters, etc.

According to one aspect, the detecting unit comprises an optical unit for optically detecting at least one analyte of interest, such as an oximetry unit for photometrically detecting any one or more analytes such as hemoglobin, including any derivatives of hemoglobin, and bilirubin. In particular, the oximetry unit may comprise at least one light source, at least one optical sensor, e.g. a photodiode array, a sample cuvette arranged between the light source and the optical sensor and optical elements such as lenses, apertures, possibly mirror(s), possibly filter(s), possibly a grating monochromator, a polychromator or prism, for guiding light from the light source to a test sample in the cuvette and from the test sample to the at least one optical sensor. Absorbance and in particular an absorbance spectrum and/or scattering can be measured. Absorbance can be measured also directly in a flow path.

According to one aspect, the detecting unit comprises a flow-through sensoric path for detecting any one or more of a gas, an electrolyte, a metabolite.

The flow-through sensoric path may comprise a sensor for each parameter/analyte, and may be embodied in a replaceable cartridge-like structure comprising a plurality of sensors. In alternative, the in-vitro diagnostic analyzer may comprise a plurality of detecting units, each having a sensoric path comprising a sensor dedicated to one parameter/analyte, and which may also be replaceable or not. According to one aspect the sensor is a thick-film sensor. A sample may thus flow into the one or more sensoric paths and different parameters/analytes may be determined by respective sensors.

According to certain aspects the detecting unit comprises any one or more of a PO2 sensor, a PCO2 sensor, a pH sensor, one or more ion selective electrode (ISE) sensors for determining electrolyte values such Na+, K+, Ca2+ and Cl⁻, one or more metabolite sensors for determining parameters such as lactate and glucose. The sensors may be e.g. respectively based on the amperometric, potentiometric or conductometric principle.

For example, a PO2 sensor typically functions according to the Clark measurement principle. This means that oxygen diffuses through a membrane to a gold multi-wire system with negative electric potential inside of the sensor. The oxygen is reduced here, which generates an electric current that is proportional to the oxygen contained in the sample. This current is measured amperometrically.

A PCO2 sensor typically is a Severinghouse-type sensor. This means that CO2 diffuses through a membrane similar to the oxygen sensor. In the sensor, the CO2 concentration changes and causes a change of the pH value, which is measured potentiometrically.

A pH sensor typically comprises a pH-sensitive membrane. Depending on the pH value of the test sample, electric potential is generated at the boundary layer between the membrane and the sample. This potential can be measured potentiometrically by a reference sensor.

Na+, K+, Ca2+ and Cl⁻ ISE sensors typically work according to the potentiometric measuring principle. They differ only by different membrane materials that enable sensitivity for the respective electrolytes.

The glucose sensor typically makes use of glucose oxidase enzyme, by which glucose is oxidized into gluconolactone with oxygen from the air. The H2O2 that is formed in this process is determined amperometrically by a manganese dioxide/carbon electrode. Since the sensor restores the oxygen that is needed for oxidation of glucose in the enzymatic reaction, the glucose value is measured independently of the oxygen concentration in the test sample.

The Lactate sensor typically makes use of lactate oxidase enzyme, by which lactate is oxidized into pyruvate with oxygen from the air. The H2O2 that is formed in this process is determined amperometrically in a manner similar to the glucose sensor.

The in-vitro diagnostic system can comprise functional units such as liquid handling units for pipetting and/or pumping, e.g. aspirating, and/or mixing of samples and/or reagents and/or other fluids, and also functional units for sorting, storing, transporting, identifying, separating, detecting.

In particular, the in-vitro diagnostic analyzer comprises at least a fluid supply unit as above described and at least one pump, e.g. a peristaltic pump, syringe pump, membrane pump or any other suitable pump, typically positioned downstream of the detecting unit for aspirating samples from sample containers and other fluids from the fluid supply unit through the aspiration needle and at least some of them, including samples, through the detecting unit.

A method of inputting samples into a detecting unit of an in-vitro diagnostic analyzer is herein also disclosed, the method comprising coupling an upstream end of an aspiration needle to an inner input-port side of a sample input port, whereas the aspiration needle comprises a downstream end fluidically connected or connectable to the detecting unit, and aspirating a sample from a sample container plugged in an outer input-port side of the sample input port. The method further comprises decoupling the upstream end of the aspiration needle from the inner input-port side and coupling the upstream end of the aspiration needle to a fluid supply port and aspirating other fluid(s) from a fluid supply unit of the in-vitro diagnostic analyzer. The method further comprises decoupling the upstream end of the aspiration needle from the fluid supply port and coupling the outer input-port side to the fluid supply port and the upstream end of the aspiration needle to the inner input-port side and rinsing the sample input port with fluid aspirated by the aspiration needle from the fluid supply unit via the sample input port.

This enables an operator to plug in a sample container into the sample input port whenever the sample input port is available, e.g. after unplugging a previous sample container, even if a previous sample analysis has not yet been completed or a QC procedure is still ongoing, that is even if the aspiration needle is coupled to the fluid supply port in order to aspirate other fluids and not to the sample input port at the time the sample container is plugged in. As soon as the aspiration needle becomes available, it then automatically decouples from the fluid supply port and couples to the sample input port in order to aspirate the new sample from the sample container that had already been plugged in. Moreover the possibility to couple also the sample input port to the fluid supply port enables rinsing the sample input port between different samples, thus minimizing the risk of carryover.

According to one aspect, the method comprises independently moving each of the sample input port and the aspiration needle by driving a respective pin through a respective guiding slot by a respective rotatable arm, each rotatable arm comprising a driving slot through which the respective pin can slide upon rotation of the arm, each guiding slot comprising ends, linear segments and curved segments respectively at positions which cause the sample input port and the aspiration needle respectively to stop, to linearly move and/or to rotate by driving the pin through the guiding slot.

According to one aspect, the method comprises rotating the sample input port to an intermediate position between a sample input position and a fluid supply position together with the aspiration needle and moving the sample input port along a longitudinal direction of the aspiration needle relative to the aspiration needle in the intermediate position, in order for the upstream end of the aspiration needle to enter at least partially into the sample container through the open end of the sample container and for air entered through a vent in the outer input-port side to remain near the open end of the sample container and away from the upstream end of the aspiration needle upon sample aspiration, in case the sample container is a syringe-like sample container.

In this way, there is no need for an operator to intervene, e.g. by manually actuating the syringe plunger for inputting the sample. On the contrary, the syringe is held in place by the sample input port and sample aspiration occurs automatically without movement of the plunger as air can enter the syringe through the air vent, in order to replace the aspirated sample volume, whereas in the intermediate position, air entered through the vent won't be able to enter the aspiration needle.

According to one aspect, the in-vitro diagnostic analyzer further comprises a controller configured to automatically execute any of the above method steps. The term "controller as used herein may include any physical or virtual processing device and in particular a programmable logic controller running a computer-readable program provided with instructions to perform operations in accordance with an operation plan and in particular in accordance with the disclosed method of inputting samples into the detecting unit. This may include a processor, a controller, a central processing unit (CPU), a microprocessor, a microcontroller, a reduced instruction circuit (RISC), an application-specific integrated circuit (ASIC), a logic circuit, or any other circuit or processor configured to execute one or more of the functions/methods described herein.

Other and further objects, features and advantages will appear from the following description of exemplary aspects and accompanying drawings, which serve to explain the principles more in detail.

### BRIEF DESCRIPTION OF THE DRAWINGS

FIG. 1 is a perspective external view of a sample input interface.
FIG. 2 is a cross-sectional view of the same sample input interface as in FIG. 1 and showing inner details of the sample input interface and in particular of a sample input port with a sample container plugged in.
FIG. 3 shows the same sample input interface of FIG. 1 with a lateral face removed (not in cross-section) and with components in the same position as in FIG. 1, without sample container.
FIG. 4 is similar to FIG. 3 but with some of the same components in different positions.
FIG. 5 is a perspective external view of the sample input interface and with components in the same position as in FIG. 2, without sample container.
FIG. 6 is the same as FIG. 5 but with later face removed to show the inner components (not in cross-section as in FIG. 2).
FIG. 7 shows a perspective view of the same sample input interface as in the other figures but from the other side and with another type of sample container plugged in the sample input port.
FIG. 8 shows a front view and a cross-sectional view through section A-A of the front view of a sample input port.
FIG. 9 shows the same sample input port of FIG. 8 in cross-section with a capillary-like sample container plugged in.
FIG. 10 shows the same sample input port of FIG. 8 and 9 in cross-section with a syringe-like sample container plugged in.
FIG. 11 is a cross-sectional view of the sample input interface of the other figures, shown in a manner similar to FIG. 2 but with a syringe-like container plugged in the sample input port and components in a different position.
FIG. 12 shows schematically an in-vitro diagnostic analyzer comprising the same sample input interface as in the other figures and it also shows schematically a first step of a method of inputting samples into a detecting unit of the in-vitro diagnostic analyzer.
FIG. 13 shows schematically the same in-vitro diagnostic analyzer of FIG. 12 and a further step of the method of inputting samples into a detecting unit of the in-vitro diagnostic analyzer.
FIG. 14 shows schematically the same in-vitro diagnostic analyzer of FIG. 12 and 13 and a further step of the method of inputting samples into a detecting unit of the in-vitro diagnostic analyzer.
FIG. 15 shows schematically the same in-vitro diagnostic analyzer of FIG. 12-14 and a further step of the method of inputting samples into a detecting unit of the in-vitro diagnostic analyzer.

Skilled artisans appreciate that elements in the figures are illustrated for simplicity and clarity and have not necessarily been drawn to scale. For example, the dimensions of some of the elements in the figures may be exaggerated relative to other elements whereas other elements may have been left out or represented in a reduced number in order to enhance clarity and improve understanding of the aspects of the present disclosure.

### DETAILED DESCRIPTION

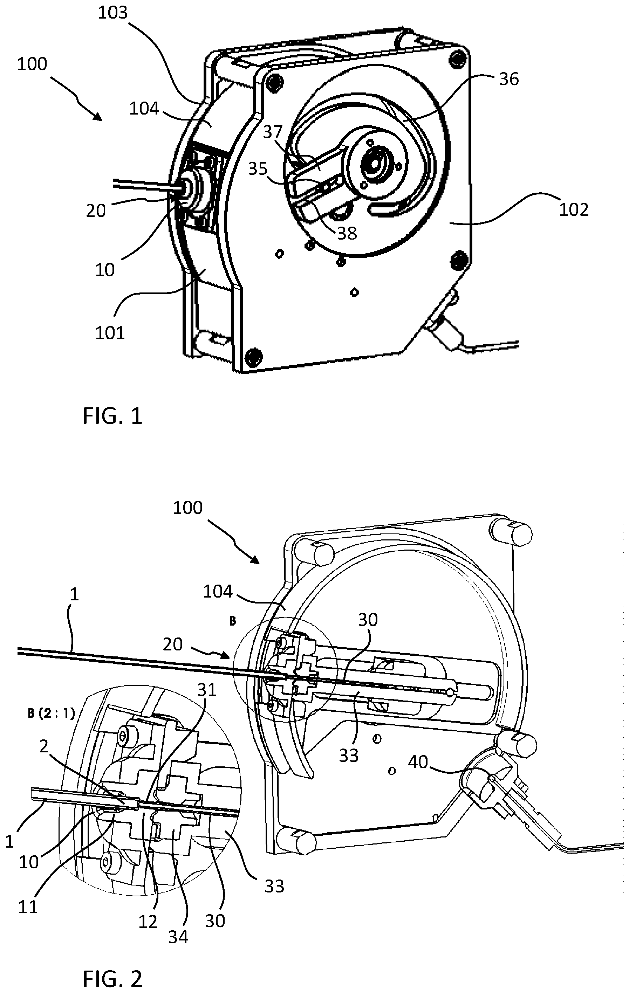

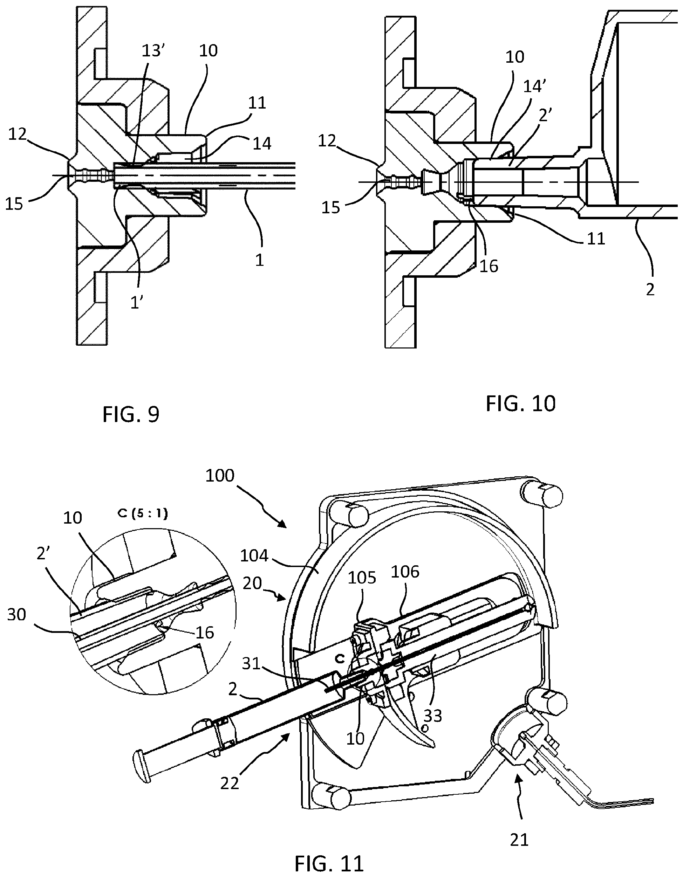

FIG. 1 to FIG. 6 taken together show an example of sample input interface 100 for inputting samples into a detecting unit of an in-vitro diagnostic analyzer, where some parts have been removed for sake of clarity. Also remaining details of the in-vitro diagnostic analyzer are not shown. In particular, FIG. 1 is a perspective external view of the sample input interface 100, comprising a front side 101 accessible to an operator, with a sample input port 10 in a sample input position 20, and two lateral faces 102, 103, at least partially not accessible to an operator. The front side 101 is part of an inner body 104 at least partially rotatable with respect to the lateral faces 102, 103, which are fixed with respect to the in-vitro diagnostic analyzer (not shown). FIG. 2 is a cross-sectional view of the sample input interface 100 and showing inner details of the sample input interface and in particular of the sample input port 10, with emphasis on magnified section B of Fig. 2. In particular the sample input port 10 comprises an outer input-port side 11 configured for plugging-in an open end 2 of a sample container 1 and an inner input-port side 12. The sample container 1 of FIG. 1-2 is a capillary-like sample container. The sample input interface 100 further comprises an aspiration needle 30 comprising an upstream end 31 and a downstream end (not shown in FIG 1-6 but in FIG. 9).

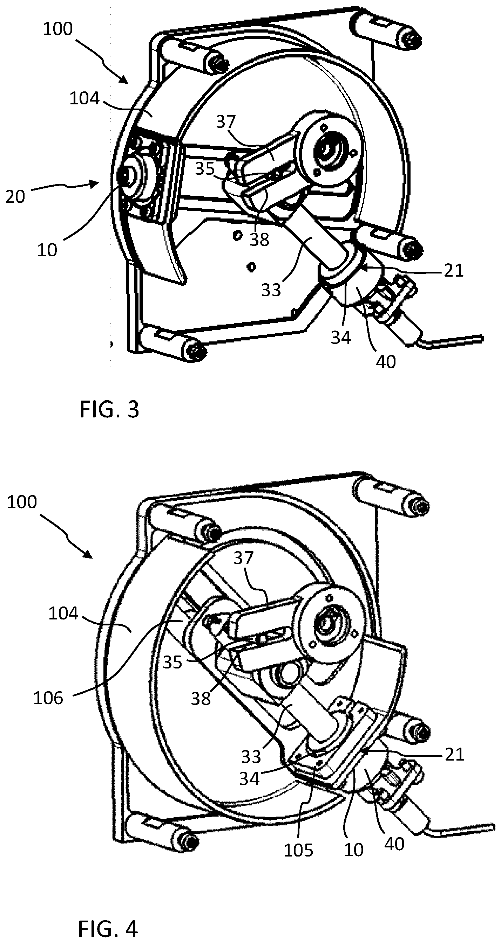

FIG. 3 and FIG. 4 show the same sample input interface 100 with the lateral face 102 removed (not in cross-section) with components in different positions respectively, the components in FIG. 3 being in the same position as in FIG. 1.

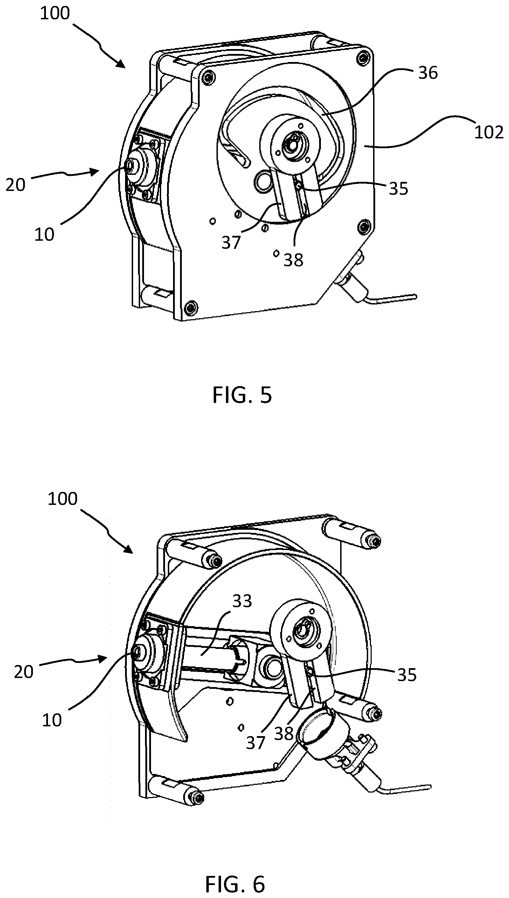

FIG. 5 and FIG. 6 show the same sample input interface 100 with the components in the same respective positions as in FIG. 2 but without sample container 1, FIG. 5 including the lateral face 102 and FIG. 6 having the lateral face 102 removed (and with components not in cross-section).

The downstream end of the aspiration needle 30 is fluidically connected or connectable to the detecting unit (not shown in FIG. 1-6) and the upstream end 31 is configured to alternately couple to the inner input-port side 12 (FIG. 2, 5-6) in order to aspirate a sample from a sample container 1 plugged in the outer input-port side 11 (FIG. 2) and to a fluid supply port 40 (FIG. 3) in order to aspirate other fluid(s) from a fluid supply unit (not shown in FIG. 1-6) of the in-vitro diagnostic analyzer. The outer input-port side 11 is further configured to couple to the fluid supply port 40, once a sample container has been unplugged, while the upstream end 31 of the aspiration needle 30 is coupled to the inner input-port side 12 (FIG. 4) in order to rinse the sample input port 10 with fluid aspirated by the aspiration needle 30 from the fluid supply unit via the sample input port 10.

In particular, the sample input port 10 is rotatable, together with the inner body 104, at least between the sample input position 20 (FIG. 1-3, 5-6) and a fluid supply position 21 (FIG. 4), the sample input position 20 being at an angular position that is conveniently accessible by an operator for plugging in a sample container 1 and/or that facilitates sample aspiration from the sample container 1, the fluid supply position 21 being in correspondence to the fluid supply port 40 and not necessarily accessible to the operator from the outside.

It can also be noted from FIG. 3, that even while the aspiration needle 30 is coupled to the fluid supply port 40 in the fluid supply position 21 with the sample input port 10 being in the sample input position 20, the sample input port 10 is available for plugging in a sample container, as shown in FIG. 1.

As it can be understood also from FIG. 4, the sample input port 10 is mounted on a sample input port guiding arm 105 translatable along a guiding slit 106 of the inner body 104, e.g. in order to couple to and decouple from the fluid supply port 40.

The aspiration needle 30 is rotatable at least between the sample input position 20 (FIG. 2, 5-6) in which the upstream end 31 of the aspiration needle 30 is aligned with, e.g. coupled to, the inner input-port side 12 when the sample input port 10 is in the sample input position 20 and the fluid supply position 21 in which the upstream end 31 of the aspiration needle 30 is aligned with, e.g. coupled to, the fluid supply port 40 (FIG. 3) or inner input-port side 12 when the sample input port 10 is in the fluid supply position 21 (FIG. 4). In particular, the aspiration needle 30 is operatively coupled to and partially integrated into, a needle guiding arm 33 that enables controlled movement, e.g. rotational and/or translational (forward/backward) movement, and precise alignment of the upstream end 31 alternately with the inner input-port side 12 and the fluid supply port 40. The upstream end 31 is translatable through a coupling head 34 of the needle guiding arm 33, constructed at least in part of an elastomeric material with a shape at least in part complementary to and/or forming a seal with the inner input-port side 12 (FIG. 2, 4) and at least in part complementary to and/or forming a sealing with the fluid supply port 40 (FIG. 3). The aspiration needle 30 and the needle guiding arm 33 are rotatable together. The aspiration needle 30 is not visible in FIG. 3-4, 6 as it is hidden inside the needle guiding arm 33.

The upstream end 31 of the aspiration needle 30 is linearly movable along a longitudinal direction of the aspiration needle 30 in order e.g. to couple to and decouple from the inner input-port side 12 and the fluid supply port 40 respectively. The needle guiding arm 33 is also linearly movable along the longitudinal direction of the aspiration needle 30 in order for its coupling head 34 to couple to and decouple from the inner input-port side 12 and the fluid supply port 40 respectively. The needle guiding arm 33 can be movable together with and/or independently from the aspiration needle 30 in the longitudinal direction.

As it can be better understood from FIG. 1, 3 and FIG. 5-6 taken together, the aspiration needle 30 is connected to a respective drive pin 35 and is movable by driving the drive pin 35 through a guiding slot 36 by a rotatable arm 37, the rotatable arm 37 comprising a driving slot 38 through which the drive pin 35 can slide upon rotation of the arm 37 thereby driving the drive pin 35 through the guiding slot 36. In particular, as shown in FIG. 1 and FIG. 5, the guiding slot 36 comprises ends, linear segments and curved segments respectively at positions which cause the aspiration needle 30 (not shown) and/or the needle guiding arm 33, respectively to stop, to linearly move and/or to rotate by driving the drive pin 35 through the guiding slot 36. For example, when the drive pin 35 is at one end of the guiding slot 36, as shown in FIG. 1, the aspiration needle 30 (not shown) with the needle guiding arm 33 are in the fluid supply position 21, as shown in FIG. 3, that corresponds to FIG. 1 without lateral face 102. When the drive pin 35 is at the other end of the guiding slot 36, as shown in FIG. 5, the aspiration needle 30 (not shown) with the needle guiding arm 33 are in the sample input position 20, as shown in FIG. 6, that corresponds to FIG. 5 without lateral face 102.

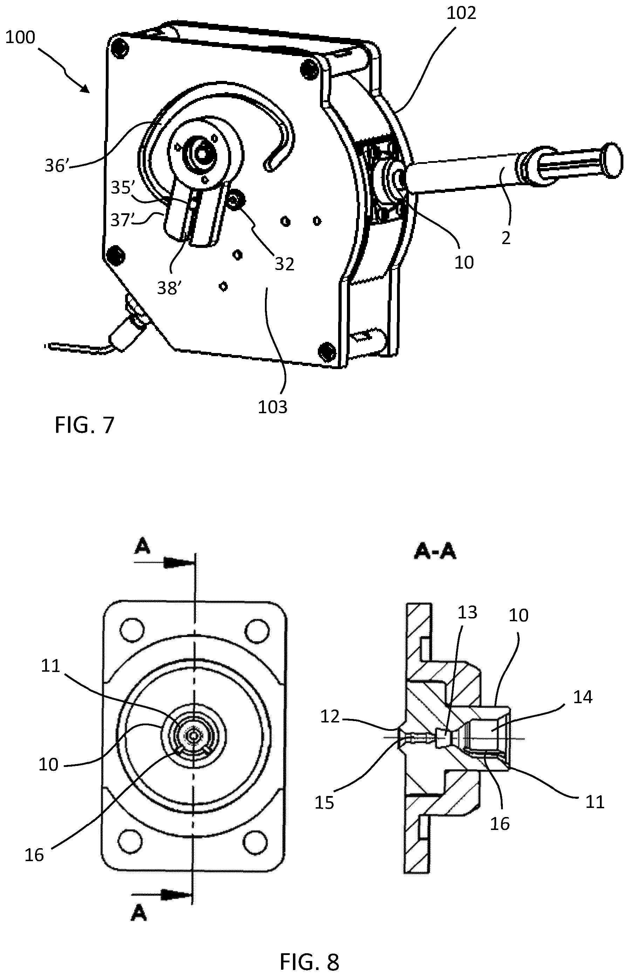

FIG. 7 shows the sample input interface 100 from the other side with look at the other later face 103 and with a syringe-like sample container 2 plugged in the sample input port 10. In particular, it can be seen that also on this side there is a drive pin 35', that is internally connected, indirectly, to the sample input port 10. The sample input port 10 is thus movable by driving the respective drive pin 35' through a respective guiding slot 36' by a respective rotatable arm 37', the rotatable arm 37' comprising a driving slot 38' through which the drive pin 35' can slide upon rotation of the arm 37' thereby driving the drive pin 35' through the guiding slot 36'. The guiding slot 36' on the lateral face 103 is specular to the guiding slot 36 on the lateral face 102 (as shown in FIG. 1, 5) and also comprising linear segments and curved segments respectively at positions which cause the sample input port 10, respectively to stop, to linearly move and/or to rotate by driving the pin 35' through the guiding slot 36'. In FIG. 7, the downstream end 32 of the aspiration needle 30 can also be seen, that is fluidically connected or connectable to the detecting unit (not shown in FIG. 7). The sample input interface 100 comprises an independent motor (not shown) for each rotatable arm 37, 37' in order to independently and/or simultaneously move the sample input port 10 and the aspiration needle 30 respectively.

FIG. 8 shows a front view and a cross-sectional view through section A-A of the front view of the sample input port 10 according to one aspect. FIG. 9 and FIG. 10 show the same sample input port 10 of FIG. 8 in cross-section with two respective sample containers 1, 2 of different type plugged in, respectively a capillary-like sample container 1 in FIG. 9 and a syringe-like sample container 2 in FIG. 10. In particular, with combined reference to FIG. 8-10 and as already seen in FIG. 2, the sample input port 10 comprises an outer input-port side 11, accessible to the operator, configured for plugging-in an open end 1', 2' of a sample container 1, 2 (the terminal part 1', 2' of the sample container 1, 2 with an open end) and for temporarily holding the sample container 1, 2, and an inner input-port side 12 communicating with the outer input-port side 11 and configured to couple to the aspiration needle 30 (not shown in FIG. 8-10) for the sample to be aspirated from the sample container 1, 2 plugged in the outer input-port side 11. In particular, the sample input port 10 is constructed of an elastomeric material. The outer input-port side 11 comprises wall sections defining an inner cavity, each section having a substantially cylindrical or frustoconical shape and varying inner diameter, such as to define a sealing and/or holding contact surface for a different type of sample container 1, 2 respectively, e.g. a capillary sealing contact surface 13' in a first section 13 for a capillary-like sample container 1 and a syringe sealing contact surface 14' in a second section 14 for a syringe-like sample container 2. The inner input-port side 12 is in this case integral to the outer input-port side 11, e.g. made as one piece. In particular the inner input-port side 12 also comprises an inner cavity 15 formed by one or more inner wall sections with parts of varying inner diameter defining at least one sealing contact surface for the aspiration needle (not shown in FIG. 8-10). The outer input-port side 11 and the inner input-port side 12 are also respectively so dimensioned and designed that the open end 1', 2' of the sample container 1, 2 is prevented from entering the inner input-port side 12 from the outer input-port side 11 whereas the aspiration needle is allowed to enter the outer input-port side 11 from the inner input-port side 12 (as can be seen from FIG. 11). The outer input-port side 11 also comprises a vent 16 for air to enter a syringe-like sample container 2 plugged in the outer input-port side 11 upon sample aspiration, as better explained in connection to FIG. 11.

FIG. 11 is a cross-sectional view of the sample input interface 100 similar to that of FIG. 2 but with a syringe-like container 2 plugged in the sample input port 10.

In particular, the sample input port 10 has rotated to an intermediate position 22 between the sample input position 20 and the fluid supply position 21 together with the aspiration needle 30. Moreover, the sample input port 10 has moved along the longitudinal direction of the aspiration needle 30 relative to the aspiration needle 30 (towards the inside of the sample input interface 100), in the intermediate position 22, so that the upstream end 31 of the aspiration needle 30 has entered into the syringe-like sample container 2 through the open end 2' of the syringe-like sample container 2, as can be better seen in the magnified section C of FIG. 11. In this way, there is no need for an operator to intervene, e.g. by manually actuating the syringe plunger for inputting the sample. On the contrary, the syringe 2 is held in place by the sample input port 10 and sample aspiration occurs automatically without movement of the plunger as air can enter the syringe 2 through the air vent 16, in order to replace the aspirated sample volume, whereas in the intermediate position 22, with the open end 2' pointing upwards, air entered through the vent 16 remains near the open end 2' of the syringe-like sample container 2 and away from the upstream end 31 of the aspiration needle 30, which is dipper into the syringe body and at a lower position than the open end, upon sample aspiration.

In general, the sample input port 10 besides being rotatable together with the inner body 104 is also movable along the longitudinal direction of the aspiration needle 30 together with, or independently from and relative to, the aspiration needle 30, and also relative to the inner body 104, e.g. together with the needle guiding arm 33 and relative to the inner body 104. In particular, as seen also in connection to FIG. 4, the sample input port 10 is mounted on a sample input port guiding arm 105 that is translatable along the guiding slit 106 of the inner body 104, e.g. in order to couple to and decouple from the fluid supply port 40 and also for aspirating sample from a syringe-like sample container 2 in the intermediate position 22 as shown in FIG. 11. An additional motor (not shown) coupled to the sample input port guiding arm 105 may be conveniently used for translation along the guiding slit 106 in the intermediate position 22.

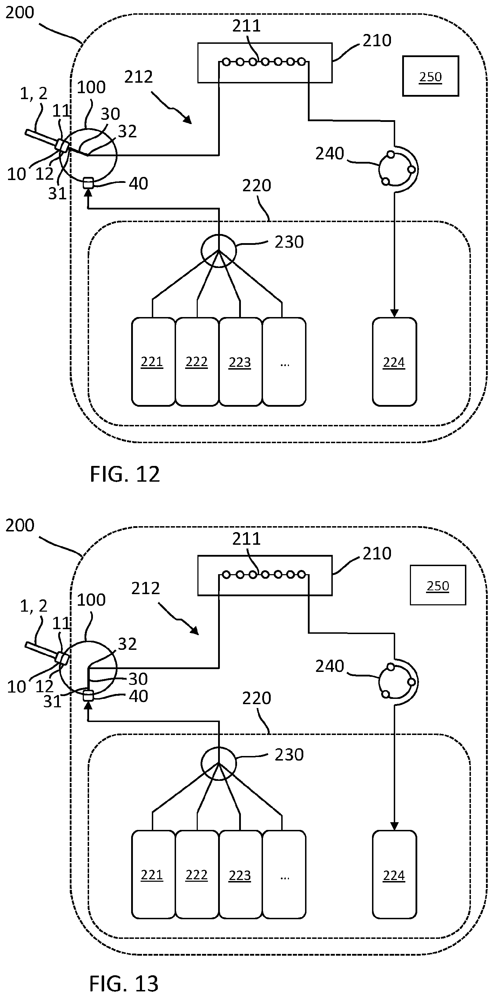

FIG. 12-15 show schematically an in-vitro diagnostic analyzer 200 comprising a sample input interface 100 as explained in connection to FIG. 1-11. In particular, the in-vitro diagnostic analyzer 200 comprises a detecting unit 210, comprising a fluidic system 212 comprising in this example a flow-through sensoric path 211 for detecting e.g. any one or more of a gas, an electrolyte, a metabolite in a sample. The in-vitro diagnostic analyzer 200 further comprises a fluid supply unit 220 comprising a plurality of fluid supply reservoirs 221, 222, 223, where a fluid supply reservoir 221 comprises a wash/rinse fluid, and a waste container 224 where fluids circulated through the fluidic system 212 may be wasted at the end of the process. Fluids from the various fluid supply reservoirs 221, 222, 223 may be selected via a selection valve 230. The in-vitro diagnostic analyzer 200 further comprises a pump 240, e.g. a peristaltic pump, positioned downstream of the detecting unit 210 for aspirating samples from sample containers 1, 2 and other fluids from the fluid supply unit 220 through the aspiration needle 30 and through the detecting unit 210 by coupling the aspiration needle 30 and in particular the upstream end 31 either to the sample input port 10 or to the fluid supply port 40, either directly or indirectly via the sample input port 10, whereas the downstream end 32 is fluidically coupled to the detecting unit 210.

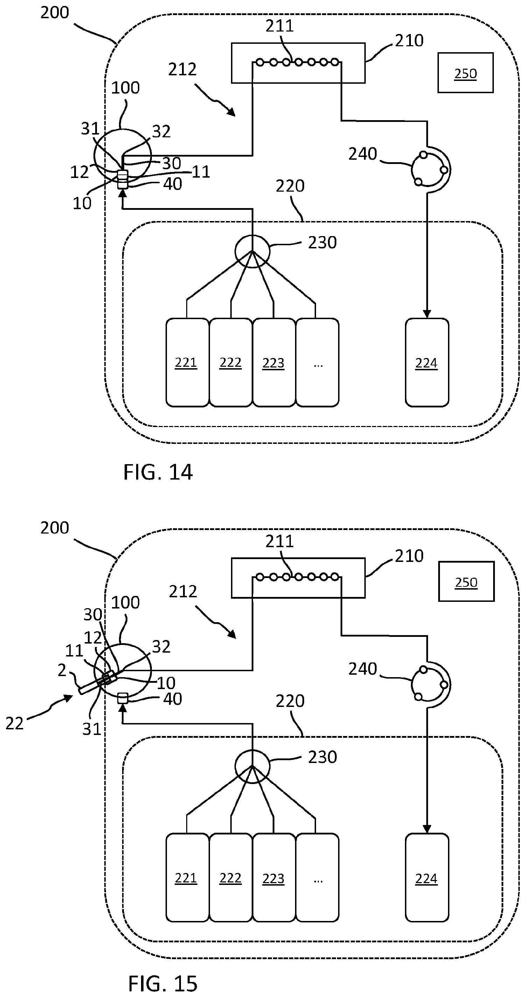

With continued reference to FIG. 12-15, also a respective method of inputting samples into the detecting unit 210 of the in-vitro diagnostic analyzer 200 is schematically shown. In particular, as shown in FIG. 12, the method comprises coupling an upstream end 31 of an aspiration needle 30 to an inner input-port side 12 of a sample input port 10, whereas the aspiration needle 30 comprises a downstream end 32 fluidically connected to the detecting unit 210, and aspirating a sample from a sample container1, 2 plugged in an outer input-port side 11 of the sample input port 10. As further shown in FIG. 13, the method comprises decoupling the upstream end 31of the aspiration needle 30 from the inner input-port side 12 and coupling the upstream end 31 of the aspiration needle 30 to a fluid supply port 40 and aspirating other fluid(s) from a fluid supply unit 220 of the in-vitro diagnostic analyzer 200. As further shown in FIG. 14, the method comprises decoupling the upstream end 31 of the aspiration needle 30 from the fluid supply port 40 and coupling the outer input-port side 11 to the fluid supply port 40 and the upstream end 31 of the aspiration needle 30 to the inner input-port side 12 and rinsing the sample input port 10 with fluid aspirated by the aspiration needle 30 from the fluid supply unit 220 via the sample input port 10. As further shown in FIG. 15, the method comprises rotating the sample input port 10 to an intermediate position 22 between a sample input position (as shown in FIG. 12) and a fluid supply position (as shown in FIG. 13, 14) together with the aspiration needle 30 and moving the sample input port 10 along a longitudinal direction of the aspiration needle 30 relative to the aspiration needle 30 in the intermediate position 22, in order for the upstream end 31 of the aspiration needle 30 to enter at least partially into the sample container 2 through the open end of the sample container 2 and for air entered through a vent (not shown in FIG. 15) in the outer input-port side 11 to remain near the open end of the sample container 2 and away from the upstream end 31 of the aspiration needle 30 upon sample aspiration, in case the sample container is a syringe-like sample container 2.

With continued reference to FIG. 12-15 the in-vitro diagnostic system 200 further comprises a controller 250 configured to automatically execute any of the above method steps.

Modifications and variations of the disclosed aspects are certainly possible in light of the above description. It is therefore to be understood, that within the scope of the appended claims, the invention may be practiced otherwise than as specifically devised in the above examples.

Particularly, it is to be understood that at least some of the drawings or parts are only schematic and provided as way of example only. Also the relationship between elements may be other than the one shown, whereas parts not relevant for the purpose of this disclosure have been omitted.

Also, reference throughout the preceding specification to "one aspect", "one aspect", "one example" or "an example", means that a particular feature, structure or characteristic described in connection with the aspect or example is included in at least one aspect. Thus, appearances of the phrases "in one aspect", "in one aspect", "one example" or "an example", in various places throughout this specification are not necessarily all referring to the same aspect or example.

Furthermore, the particular features, structures, or characteristics may be combined in any suitable combinations and / or sub-combinations in one or more aspects or examples, insofar as falling within the scope of the appended claims.

## Claims

1. A sample input interface (100) for inputting samples into a detecting unit (210) of an in-vitro diagnostic analyzer (200), the sample input interface (100) comprising
- a sample input port (10) comprising an outer input-port side (11) configured for plugging-in an open end (1', 2') of a sample container (1, 2) and an inner input-port side (12),
- an aspiration needle (30) comprising an upstream end (31) and a downstream end (32), wherein the downstream end (32) is fluidically connected or connectable to the detecting unit (210) and wherein the upstream end (31) is configured to alternately couple to the inner input-port side (12) in order to aspirate a sample from a sample container (1, 2) plugged in the outer input-port side (11) and to a fluid supply port (40) in order to aspirate other fluid(s) from a fluid supply unit (220) of the in-vitro diagnostic analyzer (200), and wherein the outer input-port side (11) is further configured to alternately couple to the fluid supply port (40) while the upstream end (31) of the aspiration needle (30) is coupled to the inner input-port side (12) in order to rinse the sample input port (10) with fluid aspirated by the aspiration needle (30) from the fluid supply unit (220) via the sample input port (10).

2. The sample input interface (100) according to claim 1 wherein the sample input port (10) is rotatable at least between a sample input position (20) and a fluid supply position (21).

3. The sample input interface (100) according to claim 2 wherein the aspiration needle (30) is rotatable at least between the sample input position (20) in which the upstream end (31) of the aspiration needle (30) is aligned with the inner input-port side (12) when the sample input port (10) is in the sample input position (20) and the fluid supply position (21) in which the upstream end (31) of the aspiration needle (30) is aligned with the fluid supply port (40).

4. The sample input interface (100) according to claim 3 wherein at least the upstream end (31) of the aspiration needle (30) is linearly movable along a longitudinal direction of the aspiration needle (30) in order to couple to and decouple from the inner input-port side (12) and the fluid supply port (40) respectively.

5. The sample input interface (100) according to claim 4 wherein the sample input port (10) is movable along the longitudinal direction of the aspiration needle (30) together with, or independently from and relative to, the aspiration needle (30).

6. The sample input interface (100) according to any of the preceding claims wherein each of the aspiration needle (30) and the sample input port (10), directly or indirectly, are connected to a respective drive pin (35, 35') and are movable by driving the respective drive pin (35, 35') through a respective guiding slot (36, 36') by a respective rotatable arm (37, 37'), each rotatable arm (37, 37') comprising a driving slot (38, 38') through which the respective drive pin (35, 35') can slide upon rotation of the arm (37, 37') thereby driving the respective drive pin (35, 35') through the respective guiding slot (36, 36').

7. The sample input interface (100) according to claim 6 wherein each guiding slot (36, 36') comprises ends, linear segments and curved segments respectively at positions which cause the aspiration needle (30) and the sample input port (10) respectively to stop, to linearly move and/or to rotate by driving the respective drive pin (35, 35') through the respective guiding slot (36, 36').

8. The sample input interface (100) according to claim 6 or 7 comprising an independent motor for each rotatable arm (37, 37') in order to independently and/or simultaneously move the aspiration needle (30) and the sample input port (10) respectively.

9. The sample input interface (100) according to any of the preceding claims wherein the outer input-port side (11) comprises cavity wall sections of different respective cross-section 13, 14 configured for plugging-in the open end (1', 2') of different respective sample containers (1, 2), the sample containers (1, 2) including at least a capillary-like sample container (1) and a syringe-like sample container (2).

10. The sample input interface (100) according to claim 9 wherein the outer input-port side (11) comprises a vent (16) for air to enter a syringe-like sample container (2) plugged in the outer input-port side (11) upon sample aspiration.

11. The sample input interface (100) according to claim 10 wherein the sample input port (10) is rotatable to an intermediate position (22) between the sample input position (20) and the fluid supply position (21) together with the aspiration needle (30) and wherein the sample input port (10) is movable along the longitudinal direction of the aspiration needle (30) relative to the aspiration needle (30) in the intermediate position (22), in order for the upstream end (31) of the aspiration needle (30) to enter at least partially into the syringe-like sample container (2) through the open end (2') of the syringe-like sample container (2) and for air entered through the vent (16) to remain near the open end (2') of the syringe-like sample container (2) and away from the upstream end (31) of the aspiration needle (30) upon sample aspiration.

12. An in-vitro diagnostic analyzer (200) comprising a sample input interface (100) according to any of the preceding claims.

13. Automated method of inputting samples into a detecting unit (210) of an in-vitro diagnostic analyzer (200), the method comprising
- coupling an upstream end (31) of an aspiration needle (30) to an inner input-port side (12) of a sample input port (10), whereas the aspiration needle (30) comprises a downstream end (32) fluidically connected or connectable to the detecting unit (210), and aspirating a sample from a sample container (1, 2) plugged in an outer input-port side (11) of the sample input port (10),
- decoupling the upstream end (31) of the aspiration needle (30) from the inner input-port side (12) and coupling the upstream end (31) of the aspiration needle (30) to a fluid supply port (40) and aspirating other fluid(s) from a fluid supply unit (220) of the in-vitro diagnostic analyzer (200),
- decoupling the upstream end (31) of the aspiration needle (30) from the fluid supply port (40),
- coupling the outer input-port side (11) to the fluid supply port (40) and the upstream end (31) of the aspiration needle (30) to the inner input-port side (12) and rinsing the sample input port (40) with fluid aspirated by the aspiration needle (30) from the fluid supply unit (220) via the sample input port (10).

14. The method according to claim 13 comprising independently moving each of the aspiration needle (30) and the sample input port (10) by driving a respective drive pin (35, 35') through a respective guiding slot (36, 36') by a respective rotatable arm (37, 37'), each rotatable arm (37, 37') comprising a driving slot (38, 38') through which the respective drive pin (35, 35') can slide upon rotation of the arm (37, 37'), each guiding slot (36, 36') comprising ends, linear segments and curved segments respectively at positions which cause the aspiration needle (30) and the sample input port (10) respectively to stop, to linearly move and/or to rotate by driving the respective drive pin (35, 35') through the guiding slot (36, 36').

15. The method according to claim 13 or 14 comprising rotating the sample input port (10) to an intermediate position (22) between a sample input position (20) and a fluid supply position (21) together with the aspiration needle (30) and moving the sample input port (10) along a longitudinal direction of the aspiration needle (30) relative to the aspiration needle (30) in the intermediate position (22), in order for the upstream end (31) of the aspiration needle (30) to enter at least partially into the sample container (2) through the open end (2') of the sample container (2) and for air entered through a vent (16) in the outer input-port side (11) to remain near the open end (2') of the sample container (2) and away from the upstream end (31) of the aspiration needle (30) upon sample aspiration, in case the sample container (2) is a syringe-like sample container (2).

## Patentansprüche

1. Probeneingabeschnittstelle (100) zur Eingabe von Proben in eine Detektionseinheit (210) eines In-vitro-Diagnoseanalysators (200), wobei die Probeneingabeschnittstelle (100) Folgendes umfasst:
- einen Probeneingabeanschluss (10), der eine äußere Eingabeanschlussseite (11), die zum Einstecken eines offenen Endes (1', 2') eines Probenbehälters (1, 2) konfiguriert ist, und eine innere Eingabeanschlussseite (12) umfasst,
- eine Ansaugnadel (30), die ein stromaufwärtiges Ende (31) und ein stromabwärtiges Ende (32) umfasst, wobei das stromabwärtige Ende (32) fluidisch mit der Detektionseinheit (210) verbunden oder verbindbar ist und wobei das stromaufwärtige Ende (31) so ausgebildet ist, dass es abwechselnd mit der inneren Eingabeanschlussseite (12) gekoppelt werden kann, um eine Probe aus einem Probenbehälter (1, 2), der in die äußere Eingabeanschlussseite (11) eingesteckt ist, anzusaugen, und mit einem Fluidzufuhranschluss (40) gekoppelt werden kann, um ein anderes Fluid oder andere Fluide aus einer Fluidzufuhreinheit (220) des In-vitro-Diagnoseanalysators (200) anzusaugen, und wobei die äußere Eingabeanschlussseite (11) ferner so konfiguriert ist, dass sie abwechselnd mit dem Fluidzufuhranschluss (40) gekoppelt wird, während das stromaufwärtige Ende (31) der Ansaugnadel (30) mit der inneren Eingabeanschlussseite (12) gekoppelt ist, um den Probeneingabeanschluss (10) mit Fluid zu spülen, das von der Ansaugnadel (30) aus der Fluidzufuhreinheit (220) über den Probeneingabeanschluss (10) angesaugt wurde.

2. Probeneingabeschnittstelle (100) nach Anspruch 1, wobei der Probeneingabeanschluss (10) mindestens zwischen einer Probeneingabeposition (20) und einer Fluidzufuhrposition (21) wechseln kann.

3. Probeneingabeschnittstelle (100) nach Anspruch 2, wobei die Ansaugnadel (30) mindestens zwischen der Probeneingabeposition (20), in der das stromaufwärtige Ende (31) der Ansaugnadel (30) auf die innere Eingabeanschlussseite (12) ausgerichtet ist, wenn sich der Probeneingabeanschluss (10) in der Probeneingabeposition (20) befindet, und der Fluidzufuhrposition (21), in der das stromaufwärtige Ende (31) der Ansaugnadel (30) auf den Fluidzufuhranschluss (40) ausgerichtet ist, wechseln kann.

4. Probeneingabeschnittstelle (100) nach Anspruch 3, wobei mindestens das stromaufwärtige Ende (31) der Ansaugnadel (30) entlang einer Längsrichtung der Ansaugnadel (30) linear beweglich ist, um mit der inneren Eingabeanschlussseite (12) bzw. dem Fluidzufuhranschluss (40) gekoppelt bzw. davon getrennt zu werden.

5. Probeneingabeschnittstelle (100) nach Anspruch 4, wobei der Probeneingabeanschluss (10) entlang der Längsrichtung der Ansaugnadel (30) zusammen mit oder unabhängig von und relativ zu der Ansaugnadel (30) beweglich ist.

6. Probeneingabeschnittstelle (100) nach einem der vorhergehenden Ansprüche, wobei sowohl die Ansaugnadel (30) als auch der Probeneingabeanschluss (10) direkt oder indirekt mit einem jeweiligen Antriebsstift (35, 35') verbunden ist und durch Treiben des jeweiligen Antriebsstifts (35, 35') durch einen jeweiligen Führungsschlitz (36, 36') mittels eines jeweiligen drehbaren Arms (37, 37') beweglich sind, wobei jeder drehbare Arm (37, 37') einen Antriebsschlitz (38, 38') umfasst, durch den der jeweilige Antriebsstift (35, 35') bei Drehung des Arms (37, 37') gleiten kann, wodurch der jeweilige Antriebsstift (35, 35') durch den jeweiligen Führungsschlitz (36, 36') getrieben wird.

7. Probeneingabeschnittstelle (100) nach Anspruch 6, wobei jeder Führungsschlitz (36, 36') Enden, lineare Segmente bzw. gekrümmte Segmente an Positionen umfasst, die bewirken, dass die Ansaugnadel (30) bzw. der Probeneingabeanschluss (10) stoppen, sich linear bewegen und/oder sich drehen, indem der jeweilige Antriebsstift (35, 35') durch den jeweiligen Führungsschlitz (36, 36') getrieben wird.

8. Probeneingabeschnittstelle (100) nach Anspruch 6 oder 7, die einen unabhängigen Motor für jeden drehbaren Arm (37, 37') umfasst, um die Ansaugnadel (30) bzw. den Probeneingabeanschluss (10) unabhängig und/oder gleichzeitig zu bewegen.

9. Probeneingabeschnittstelle (100) nach einem der vorhergehenden Ansprüche, wobei die äußere Eingabeanschlussseite (11) Hohlraumwandabschnitte unterschiedlichen jeweiligen Querschnitts (13, 14) umfasst, die zum Einstecken des offenen Endes (1', 2') unterschiedlicher jeweiliger Probenbehälter (1, 2) konfiguriert sind, wobei die Probenbehälter (1, 2) mindestens einen kapillarartigen Probenbehälter (1) und einen spritzenartigen Probenbehälter (2) einschließen.

10. Probeneingabeschnittstelle (100) nach Anspruch 9, wobei die äußere Eingabeanschlussseite (11) eine Lüftungsöffnung (16) umfasst, damit bei Ansaugen der Probe Luft in einen spritzenartigen Probenbehälter (2) eintritt, der in der äußeren Eingabeanschlussseite (11) eingesteckt ist.

11. Probeneingabeschnittstelle (100) nach Anspruch 10, wobei der Probeneingabeanschluss (10) zusammen mit der Ansaugnadel (30) in eine Zwischenposition (22) zwischen der Probeneingabeposition (20) und der Fluidzufuhrposition (21) wechseln kann und wobei der Probeneingabeanschluss (10) in der Zwischenposition (22) entlang der Längsrichtung der Ansaugnadel (30) relativ zu der Ansaugnadel (30) beweglich ist, damit das stromaufwärtige Ende (31) der Ansaugnadel (30) mindestens teilweise durch das offene Ende (2') des spritzenartigen Probenbehälters (2) in den spritzenartigen Probenbehälter (2) eintritt und durch die Lüftungsöffnung (16) eingetretene Luft bei Ansaugen der Probe nahe dem offenen Ende (2') des spritzenartigen Probenbehälters (2) und fern von dem stromaufwärtigen Ende (31) der Ansaugnadel (30) bleibt.

12. In-vitro-Diagnoseanalysator (200), der eine Probeneingabeschnittstelle (100) nach einem der vorhergehenden Ansprüche umfasst.

13. Automatisiertes Verfahren zur Eingabe von Proben in eine Detektionseinheit (210) eines In-vitro-Diagnoseanalysators (200), wobei das Verfahren Folgendes umfasst:
- Koppeln eines stromaufwärtigen Endes (31) einer Ansaugnadel (30) mit einer inneren Eingabeanschlussseite (12) eines Probeneingabeanschlusses (10), wohingegen die Ansaugnadel (30) ein stromabwärtiges Ende (32) umfasst, das fluidisch mit der Detektionseinheit (210) verbunden oder verbindbar ist, und Ansaugen einer Probe aus einem Probenbehälter (1, 2), der in eine äußere Eingabeanschlussseite (11) des Probeneingabeanschlusses (10) eingesteckt ist,
- Trennen des stromaufwärtigen Endes (31) der Ansaugnadel (30) von der inneren Eingabeanschlussseite (12) und Koppeln des stromaufwärtigen Endes (31) der Ansaugnadel (30) mit einem Fluidzufuhranschluss (40) und Ansaugen eines anderen Fluids oder anderer Fluide aus einer Fluidzufuhreinheit (220) des In-vitro-Diagnoseanalysators (200),
- Trennen des stromaufwärtigen Endes (31) der Ansaugnadel (30) von dem Fluidzufuhranschluss (40),
- Koppeln der äußeren Eingabeanschlussseite (11) mit dem Fluidzufuhranschluss (40) und des stromaufwärtigen Endes (31) der Ansaugnadel (30) mit der inneren Eingabeanschlussseite (12) und Spülen des Probeneingabeanschlusses (40) mit Fluid, das von der Ansaugnadel (30) aus der Fluidzufuhreinheit (220) über den Probeneingabeanschluss (10) angesaugt wurde.

14. Verfahren nach Anspruch 13, das das unabhängige Bewegen sowohl der Ansaugnadel (30) als auch des Probeneingabeanschlusses (10) durch Treiben eines jeweiligen Antriebsstifts (35, 35') durch einen jeweiligen Führungsschlitz (36, 36') mittels eines jeweiligen drehbaren Arms (37, 37') umfasst, wobei jeder drehbare Arm (37, 37') einen Antriebsschlitz (38, 38') umfasst, durch den der jeweilige Antriebsstift (35, 35') bei Drehung des Arms (37, 37') gleiten kann, wobei jeder Führungsschlitz (36, 36') Enden, lineare Segmente bzw. gekrümmte Segmente an Positionen umfasst, die bewirken, dass die Ansaugnadel (30) bzw. der Probeneingabeanschluss (10) stoppen, sich linear bewegen und/oder sich drehen, indem der jeweilige Antriebsstift (35, 35') durch den Führungsschlitz (36, 36') getrieben wird.

15. Verfahren nach Anspruch 13 oder 14, das das Wechseln des Probeneingabeanschlusses (10) zusammen mit der Ansaugnadel (30) in eine Zwischenposition (22) zwischen einer Probeneingabeposition (20) und einer Fluidzufuhrposition (21) und das Bewegen des Probeneingabeanschlusses (10) in der Zwischenposition (22) entlang einer Längsrichtung der Ansaugnadel (30) relativ zu der Ansaugnadel (30) umfasst, damit das stromaufwärtige Ende (31) der Ansaugnadel (30) mindestens teilweise durch das offene Ende (2') des Probenbehälters (2) in den Probenbehälter (2) eintritt und durch eine Lüftungsöffnung (16) in der äußeren Eingabeanschlussseite (11) eingetretene Luft bei Ansaugen der Probe nahe dem offenen Ende (2') des Probenbehälters (2) und fern von dem stromaufwärtigen Ende (31) der Ansaugnadel (30) bleibt, falls der Probenbehälter (2) ein spritzenartiger Probenbehälter (2) ist.

## Revendications

1. Interface d'entrée d'échantillon (100) pour faire entrer des échantillons dans une unité de détection (210) d'un analyseur de diagnostic in vitro (200), l'interface d'entrée d'échantillon (100) comprenant
- un orifice d'entrée d'échantillon (10) comprenant un côté externe d'orifice d'entrée (11) conçu pour recevoir une extrémité ouverte (1', 2') d'un récipient d'échantillon (1, 2) et un côté interne d'orifice d'entrée (12),
- une aiguille d'aspiration (30) comprenant une extrémité amont (31) et une extrémité aval (32), dans laquelle l'extrémité aval (32) est reliée ou pouvant être relié de manière fluidique à l'unité de détection (210) et dans laquelle l'extrémité amont (31) est conçue pour s'accoupler de manière alternative au côté interne d'orifice d'entrée (12) afin d'aspirer un échantillon provenant d'un récipient d'échantillon (1, 2) reçu dans le côté externe d'orifice d'entrée (11) et à un orifice d'alimentation en fluide (40) afin d'aspirer un ou plusieurs autres fluides provenant d'une unité d'alimentation en fluide (220) de l'analyseur de diagnostic in vitro (200), et dans laquelle le côté externe d'orifice d'entrée (11) est en outre conçu pour s'accoupler de manière alternative à l'orifice d'alimentation en fluide (40) pendant que l'extrémité amont (31) de l'aiguille d'aspiration (30) est accouplée au côté interne d'orifice d'entrée (12) afin de rincer l'orifice d'entrée d'échantillon (10) avec un fluide aspiré par l'aiguille d'aspiration (30) provenant de l'unité d'alimentation en fluide (220) par l'intermédiaire de l'orifice d'entrée d'échantillon (10).

2. Interface d'entrée d'échantillon (100) selon la revendication 1 dans laquelle l'orifice d'entrée d'échantillon (10) est rotatif au moins entre une position d'entrée d'échantillon (20) et une position d'alimentation en fluide (21).

3. Interface d'entrée d'échantillon (100) selon la revendication 2 dans laquelle l'aiguille d'aspiration (30) est rotative au moins entre la position d'entrée d'échantillon (20) dans laquelle l'extrémité amont (31) de l'aiguille d'aspiration (30) est alignée avec le côté interne d'orifice d'entrée (12) lorsque l'orifice d'entrée d'échantillon (10) est dans la position d'entrée d'échantillon (20) et la position d'alimentation en fluide (21) dans laquelle l'extrémité amont (31) de l'aiguille d'aspiration (30) est alignée avec l'orifice d'alimentation en fluide (40).

4. Interface d'entrée d'échantillon (100) selon la revendication 3 dans laquelle au moins l'extrémité amont (31) de l'aiguille d'aspiration (30) est mobile de manière linéaire le long d'une direction longitudinale de l'aiguille d'aspiration (30) afin respectivement de s'accoupler à et de se désaccoupler du côté interne d'orifice d'entrée (12) et de l'orifice d'alimentation en fluide (40).

5. Interface d'entrée d'échantillon (100) selon la revendication 4 dans laquelle l'orifice d'entrée d'échantillon (10) est mobile le long de la direction longitudinale de l'aiguille d'aspiration (30) conjointement avec, ou indépendamment de et par rapport à l'aiguille d'aspiration (30).

6. Interface d'entrée d'échantillon (100) selon l'une quelconque des revendications précédentes dans laquelle chacun parmi l'aiguille d'aspiration (30) et l'orifice d'entrée d'échantillon (10), directement ou indirectement, est relié à une goupille d'entraînement (35, 35') respective et est mobile par entraînement de la goupille d'entraînement (35, 35') respective à travers une fente de guidage (36, 36') respective par un bras rotatif (37, 37') respectif, chaque bras rotatif (37, 37') comprenant une fente d'entraînement (38, 38') à travers laquelle la goupille d'entraînement (35, 35') respective peut coulisser lors de la rotation du bras (37, 37') entraînant ainsi la goupille d'entraînement (35, 35') respective à travers la fente de guidage (36, 36') respective.

7. Interface d'entrée d'échantillon (100) selon la revendication 6 dans laquelle chaque fente de guidage (36, 36') comprend des extrémités, des segments linéaires et des segments incurvés respectivement au niveau des positions qui amènent l'aiguille d'aspiration (30) et l'orifice d'entrée d'échantillon (10) respectivement à s'arrêter, à se déplacer de manière linéaire et/ou à tourner par entraînement de la goupille d'entraînement (35, 35') respective à travers la fente de guidage (36, 36') respective.

8. Interface d'entrée d'échantillon (100) selon la revendication 6 ou 7 comprenant un moteur indépendant pour chaque bras rotatif (37, 37') afin de déplacer indépendamment et/ou simultanément respectivement l'aiguille d'aspiration (30) et l'orifice d'entrée d'échantillon (10).

9. Interface d'entrée d'échantillon (100) selon l'une quelconque des revendications précédentes dans laquelle le côté externe d'orifice d'entrée (11) comprend des sections de paroi de cavité de sections transversales (13, 14) respectives différentes conçues pour recevoir l'extrémité ouverte (1, 2') de récipients d'échantillon (1, 2) respectifs différents, les récipients d'échantillon (1, 2) comprenant au moins un récipient d'échantillon de type capillaire (1) et un récipient d'échantillon de type seringue (2).

10. Interface d'entrée d'échantillon (100) selon la revendication 9 dans laquelle le côté externe d'orifice d'entrée (11) comprend un évent (16) pour que l'air entre dans un récipient d'échantillon de type seringue (2) reçu dans le côté externe d'orifice d'entrée (11) lors de l'aspiration de l'échantillon.

11. Interface d'entrée d'échantillon (100) selon la revendication 10 dans laquelle l'orifice d'entrée d'échantillon (10) est rotatif jusqu'à une position intermédiaire (22) entre la position d'entrée d'échantillon (20) et la position d'alimentation en fluide (21) conjointement avec l'aiguille d'aspiration (30) et dans laquelle l'orifice d'entrée d'échantillon (10) est mobile le long de la direction longitudinale de l'aiguille d'aspiration (30) par rapport à l'aiguille d'aspiration (30) dans la position intermédiaire (22), afin que l'extrémité amont (31) de l'aiguille d'aspiration (30) entre au moins partiellement dans le récipient d'échantillon de type seringue (2) à travers l'extrémité ouverte (2') du récipient d'échantillon de type seringue (2) et que l'air qui est entré à travers l'évent (16) reste à proximité de l'extrémité ouverte (2') du récipient d'échantillon de type seringue (2) et éloigné de l'extrémité amont (31) de l'aiguille d'aspiration (30) lors de l'aspiration de l'échantillon.

12. Analyseur de diagnostic in vitro (200) comprenant une interface d'entrée d'échantillon (100) selon l'une quelconque des revendications précédentes.

13. Procédé automatisé d'entrée d'échantillons dans une unité de détection (210) d'un analyseur de diagnostic in vitro (200), le procédé comprenant
- l'accouplement d'une extrémité amont (31) d'une aiguille d'aspiration (30) à un côté interne d'orifice d'entrée (12) d'un orifice d'entrée d'échantillon (10), tandis que l'aiguille d'aspiration (30) comprend une extrémité aval (32) reliée ou pouvant être relié de manière fluidique à l'unité de détection (210), et l'aspiration d'un échantillon provenant d'un récipient d'échantillon (1, 2) reçu dans un côté externe d'orifice d'entrée (11) de l'orifice d'entrée d'échantillon (10),
- le désaccouplement de l'extrémité amont (31) de l'aiguille d'aspiration (30) d'avec le côté interne d'orifice d'entrée (12) et l'accouplement de l'extrémité amont (31) de l'aiguille d'aspiration (30) à un orifice d'alimentation en fluide (40) et l'aspiration d'un ou de plusieurs autres fluides provenant d'une unité d'alimentation en fluide (220) de l'analyseur de diagnostic in vitro (200),
- le désaccouplement de l'extrémité amont (31) de l'aiguille d'aspiration (30) d'avec l'orifice d'alimentation en fluide (40),
- l'accouplement du côté externe d'orifice d'entrée (11) à l'orifice d'alimentation en fluide (40) et de l'extrémité amont (31) de l'aiguille d'aspiration (30) au côté interne d'orifice d'entrée (12) et le rinçage de l'orifice d'entrée d'échantillon (40) avec un fluide aspiré par l'aiguille d'aspiration (30) provenant de l'unité d'alimentation en fluide (220) par l'intermédiaire de l'orifice d'entrée d'échantillon (10).

14. Procédé selon la revendication 13 comprenant le déplacement de manière indépendante de chacun parmi l'aiguille d'aspiration (30) et l'orifice d'entrée d'échantillon (10) par entraînement d'une goupille d'entraînement (35, 35') respective à travers une fente de guidage (36, 36') respective par un bras rotatif (37, 37') respectif, chaque bras rotatif (37, 37') comprenant une fente d'entraînement (38, 38') à travers laquelle la goupille d'entraînement (35, 35') respective peut coulisser lors de la rotation du bras (37, 37'), chaque fente de guidage (36, 36') comprenant des extrémités, des segments linéaires et des segments incurvés respectivement au niveau des positions qui amènent l'aiguille d'aspiration (30) et l'orifice d'entrée d'échantillon (10) respectivement à s'arrêter, à se déplacer de manière linéaire et/ou à tourner par entraînement de la goupille d'entraînement (35, 35') respective à travers la fente de guidage (36, 36').

15. Procédé selon la revendication 13 ou 14 comprenant la rotation de l'orifice d'entrée d'échantillon (10) jusqu'à une position intermédiaire (22) entre une position d'entrée d'échantillon (20) et une position d'alimentation en fluide (21) conjointement avec l'aiguille d'aspiration (30) et le déplacement de l'orifice d'entrée d'échantillon (10) le long d'une direction longitudinale de l'aiguille d'aspiration (30) par rapport à l'aiguille d'aspiration (30) dans la position intermédiaire (22), afin que l'extrémité amont (31) de l'aiguille d'aspiration (30) entre au moins partiellement dans le récipient d'échantillon (2) à travers l'extrémité ouverte (2') du récipient d'échantillon (2) et que l'air qui est entré à travers un évent (16) dans le côté externe d'orifice d'entrée (11) reste à proximité de l'extrémité ouverte (2') du récipient d'échantillon (2) et éloigné de l'extrémité amont (31) de l'aiguille d'aspiration (30) lors de l'aspiration de l'échantillon, dans le cas où le récipient d'échantillon (2) est un récipient d'échantillon de type seringue (2).
